# EUROPÄISCHE PATENTSCHRIFT

(11) **EP 1 989 461 B1**
(45) Veröffentlichungstag und Bekanntmachung des Hinweises auf die Patenterteilung: **17.11.2010**
(21) Anmeldenummer: 07726383.8
(22) Anmeldetag: 14.02.2007
(51) Int. Cl.: F16D 23/02, F16D 27/00, F16H 63/30

(54) **ELEKTROMAGNETISCHE SCHALTEINRICHTUNG MIT LINEARMOTOR**
ELECTROMAGNETIC SHIFTING DEVICE COMPRISING A LINEAR MOTOR
DISPOSITIF DE COMMUTATION ÉLECTROMAGNÉTIQUE COMPORTANT UN MOTEUR LINÉAIRE

(30) Priorität: 02.03.2006 DE 102006009606
(43) Veröffentlichungstag der Anmeldung: 12.11.2008
(73) Patentinhaber: ZF Friedrichshafen AG, 88038 Friedrichshafen (DE)
(72) Erfinder: MÜLLER, Bernd, 88046 Friedrichshafen (DE)
(86) Internationale Anmeldenummer: PCT/EP2007/051427
(87) Internationale Veröffentlichungsnummer: WO 2007/099034

(56) Entgegenhaltungen:
- DE-A1- 10 103 664
- DE-A1- 19 947 405
- US-A- 2 170 926

## Beschreibung

Die Erfindung betrifft eine elektromagnetische Schalteinrichtung für ein Fahrzeuggetriebe nach der im Oberbegriff von Anspruch 1 näher definierten Art.

Im Stand der Technik werden Schaltgetriebe beschrieben, bei denen das Schalten von Gängen über Schiebemuffen erfolgt. Eine solche Schiebemuffe ist mit einer Schalteinrichtung verbunden, welche beispielsweise eine Schaltgabel mit Gleitsteinen und eine Schaltstange aufweisen kann. Die Schiebemuffe ist drehfest mit der Getriebewelle verbunden und kann über die Schalteinrichtung axial auf der Getriebewelle verschoben werden. Auf der Getriebewelle sind drehbar gelagerte Zahnräder angeordnet, welche mit fest auf der Vorgelegewelle angebrachten Zahnrädern kämmen. Wird die Schiebemuffe durch die Schalteinrichtung axial in Richtung auf das auf der Getriebewelle drehbar gelagerte Zahnrad verschoben, dann entsteht durch eine Kupplungsverzahnung eine drehmomentübertragende Verbindung zwischen der Getriebewelle und der Vorgelegewelle. Das Betätigen der Schalteinrichtung kann dabei von Hand oder automatisiert über einen Aktuator erfolgen. Bei automatisierten Getrieben erfolgt die Schaltung beispielsweise über einen Stellzylinder, welcher pneumatisch oder hydraulisch angesteuert werden kann, oder über einen elektrischen Aktuator. Nachteile solcher Schaltvorrichtungen sind Verschleißerscheinungen der mechanischen Bauteile sowie die großen Massen, die beim Schaltvorgang bewegt werden müssen.

Ebenso werden im Stand der Technik Schaltgetriebe beschrieben, deren Kupplungen und Bremsen über eine Druckmittelversorgung aus einer Getriebewelle heraus betätigt werden. Aus der DE 30 13 382 A1 ist eine Vorrichtung bekannt, bei der sowohl eine Kupplung als auch zwei Bremsen über ein Druckmittel betätigt werden. Hierzu wird einem Ringzylinderraum über die Getriebewelle ein Druckmittel zugeführt. Ohne Druckbeaufschlagung ist die Kupplung, welche als Lamellenkupplung ausgeführt ist, geöffnet und die Bremslamellen der Bremsen bilden einen Kraftschluss. Diese Ausgangsposition wird durch entsprechende Federkräfte realisiert. Durch den Druckaufbau im Zylinderraum werden Druckplatten verschoben, wodurch zum einen die Lamellenkupplung eingekuppelt wird und zum anderen die Bremsen gelöst werden. Die Verkettung der Bewegung der Druckplatten schließt ein gleichzeitiges Greifen von Kupplung und Bremse sicher aus.

Aus der DE 100 07 847 A1 ist eine Schalteinrichtung für ein Getriebe bekannt, die elektromagnetisch aktiviert wird. Zahnräder sind drehbar auf einer Getriebewelle gelagert und weisen Innenverzahnungen auf. Eine Schaltklaue ist auf der Getriebewelle drehfest aber axial verschiebbar angeordnet entlang einer Achse der Getriebewelle. Die Schalteinrichtung weist eine elektromagnetische Vorrichtung auf, über welche die Schaltklaue axial bewegt wird. Die elektromagnetische Vorrichtung ist direkt an der Schaltklaue angeordnet und wirkt auf die Schaltklaue unmittelbar ein, ohne Zuhilfenahme und Zwischenschaltung einer Schaltgabel. Über eine Steuereinrichtung wird an der elektromagnetischen Vorrichtung ein Magnetfeld erzeugt. Durch dieses Magnetfeld wird die Schaltklaue axial auf der Getriebewelle verschoben, wodurch die drehmomentübertragende Verbindung zwischen Getriebewelle und Vorgelegewelle entsteht. Da das Magnetfeld in seiner Wirkrichtung umkehrbar ist, kann die Schaltklaue axial in beiden Bewegungsrichtungen entlang der Achse bewegt werden.

Nachteilig bei den im Stand der Technik beschriebenen Schalteinrichtungen ist, dass bei tiefen Temperaturen große Schaltkräfte aufgewendet werden müssen, da das Öl an der Schaltklaue bei tiefen Temperaturen sehr zähflüssig wird. Außerdem sind diese bekannten Schalteinrichtungen verbesserungsbedürftig bezüglich Bauteilanordnung, Platzausnutzung und Zugriffsmöglichkeit der Schaltelemente.

Die DE-A-101 03 664 löst diese Probleme durch Merkmale entsprechend dem Oberbegriff des vorliegenden Anspruchs 1.

Der vorliegenden Erfindung liegt die Aufgabe zugrunde, Nachteile der DE-A-101 03 664 zu beseitigen.

Die der Erfindung zugrunde liegende Aufgabe wird durch eine, auch die kennzeichnenden Merkmale des Anspruchs 1 aufweisende, gattungsgemäße elektromagnetische Schalteinrichtung gelöst.

Erfindungsgemäß wird die drehmomentübertragende Verbindung zwischen zwei Bauteilen eines Schaltgetriebes, insbesondere die Verbindung einer Getriebewelle mit einem auf der Getriebewelle drehbar gelagerten Zahnrad, durch eine elektromagnetische Schalteinrichtung hergestellt. Zur Bildung einer Übersetzungsstufe wird eine auf der Getriebewelle drehfest angeordnete Schaltklaue axial entlang der Drehachse der Getriebewelle verschoben. Die auf der Getriebewelle drehbar angeordneten Zahnräder weisen eine Innenverzahnung und die Schaltklaue eine Außenverzahnung auf. Stehen die Innenverzahnung eines Zahnrades und die Außenverzahnung der Schaltklaue miteinander im Eingriff, dann ist eine drehmomentübertragende Verbindung hergestellt. Die Drehzahlanpassung zwischen den zu verbindenden Getriebeelementen erfolgt über eine Motorsynchronisierung, gegebenenfalls in Verbindung mit einer Getriebebremse. Die axiale Bewegung der Schaltklaue wird erfindungsgemäß durch einen Linearmotor realisiert. Linearmotoren bestehen u. a. aus einem Primärteil und einem Sekundärteil und folgen demselben Funktionsprinzip wie Drehstrommotoren, wobei die ursprünglich kreisförmig angeordneten elektrischen Erregerwicklungen in einer Ebene angeordnet sind. Die Zuordnung von Primär- und Sekundärteil richtet sich nach den Größenverhältnissen der Baugruppen (geometrische Länge). Die längere Baugruppe wird als Primärteil und die kürzere Baugruppe als Sekundärteil bezeichnet. Zur Ansteuerung eines Linearmotors kann sowohl der Primärteil als auch der Sekundärteil angesteuert werden, beispielsweise über eine Steuereinheit. Bei einem Linearmotor kann der Primärteil sowohl die ortsfeste Komponente (entspricht bei Drehstrommotoren dem Stator) als auch die bewegte Komponente (entspricht bei Drehstrommotoren dem Rotor) darstellen. Selbiges gilt entsprechend für den Sekundärteil. Der Primärteil des Linearmotors kann erfindungsgemäß sowohl in der Schaltklaue als auch in der Getriebewelle angeordnet sein, welche als Hohlwelle ausgeführt ist. Dementsprechend kann auch der Sekundärteil des Linearmotors in der Schaltklaue bzw, in der Getriebewelle angeordnet sein. Durch die Ansteuerung des Linearmotors, welche über eine Steuereinheit erfolgt, bildet sich ein längs bewegtes Magnetfeld, durch welches die Schaltklaue axial entlang der Achse der Getriebewelle bewegt wird. Da das Magnetfeld in seiner Wirkrichtung umkehrbar ist, kann die Schaltklaue in beiden Bewegungsrichtungen bewegt werden. Die elektrische Energie für den Linearmotor wird über eine generatorische Einheit erzeugt. Über die generatorische Einheit wird die mechanische Energie (Bewegungsenergie) der Getriebewelle in elektrische Energie umgewandelt. Hierbei wird die Drehzahldifferenz zwischen der Getriebewelle, beispielsweise der Haupt- oder Vorgelegewelle, und dem Getriebegehäuse genutzt. Die generatorische Einheit besteht aus einem Magneten, beispielsweise einem Elektromagneten, welcher über eine Vorrichtung mit dem Getriebegehäuse fest verbunden ist und aus einer Spule, welche sich im Magnetfeld des Magneten befindet und drehfest mit der Getriebewelle verbunden ist. Bei Rotation der Getriebewelle wird die Spule im Magnetfeld bewegt. Hierbei wird nach dem Generatorprinzip eine Spannung erzeugt, welche an eine Energieeinheit übertragen wird. Die Übertragung der induzierten Spannung an die Energieeinheit kann dabei über entsprechende elektrische Leitungen erfolgen, falls die Energieeinheit und die Spule gleich schnell rotieren. Ansonsten ist die Energieübertragung telemetrisch, beispielsweise induktiv, oder über Schleifkontakte realisierbar. Die Energieeinheit dient zur Energieversorgung der Steuereinheit des Linearmotors und beinhaltet eine Speichereinheit. In der Speichereinheit wird die von der generatorischen Einheit erzeugte elektrische Energie gespeichert, beispielsweise über Supercaps, um einen Schaltvorgang im Fahrzeugstillstand, also wenn keine Drehzahldifferenz zwischen Getriebewelle und Getriebegehäuse besteht, zu gewährleisten. Die Verbindung zwischen der Energieeinheit und der Steuereinheit des Linearmotors kann über entsprechende elektrische Leitungen, wenn die Energieeinheit und die Steuereinheit gleich schnell rotieren, oder über Schleifkontakte bzw. telemetrisch realisiert werden. Die Ansteuersignale für den Linearmotor werden von einer weiteren elektronischen Steuereinheit (ECU) an die Steuereinheit des Linearmotors übertragen. Diese Signalübertragung kann telemetrisch über die rotierende Getriebewelle erfolgen, beispielsweise induktiv oder kapazitiv. Für die induktive Signalübertragung besteht die Möglichkeit, das Magnetfeld der generatorischen Einheit zu nutzen. Ebenso ist es denkbar, dass die Signalübertragung zwischen der ECU und der Steuereinheit des Linearmotors über Schleifkontakte realisiert wird. Die ECU kann gleichzeitig als Energieversorgung für die Steuereinheit des Linearmotors dienen, wodurch die generatorische Einheit zur Energieversorgung entfallen würde. Die Steuereinheit des Linearmotors kann innerhalb oder auf der Getriebewelle angeordnet sein.

Bei einem Schaltvorgang in einem Schaltgetriebe werden die Positionen der Schaltklauen erfasst. Die Erkennung der Ist-Position der Schaltklaue erfolgt erfindungsgemäß über den Linearmotor direkt an der Schaltklaue, beispielsweise über die Veränderung der Induktivität. Um bei tiefen Temperaturen die Schaltkräfte zu reduzieren, kann der Linearmotor so angesteuert werden, dass er als Wärmequelle dient. Hierbei wird das Getriebeöl zumindest lokal im Bereich der Schalteinrichtung auf beispielsweise Betriebstemperatur erwärmt, wobei die Kaltlaufeigenschaften der Schaltklaue verbessert werden. Außerdem weisen Linearmotoren eine hohe Dynamik auf, wodurch eine schnelle Betätigung der Schaltklaue und somit ein schnelles Schalten realisierbar ist. Die Verwendung eines Linearmotors zum Betätigen der Schaltklaue ist bei allen Schaltgetrieben anwendbar, beispielsweise bei Klauen- oder Synchrongetrieben. Des Weiteren ist eine unterschiedliche Ausführungsform des Linearmotors denkbar, beispielsweise als Synchronmotor. Asynchronmotor, Gleichstrommotor oder Transversalflussmotor.

Durch das Betätigen der Schaltklaue durch die beschriebene Schalteinrichtung werden keine Betätigungselemente zwischen den Zahnrädern benötigt, wodurch diese näher aneinander angeordnet sein können und somit Nachteile bekannter Schalteinrichtungen bezüglich Bauteilanordnung, Platzausnutzung und Zugriffsmöglichkeit der Schaltelemente verbessert werden.

Im Folgenden wird das Grundprinzip der Erfindung, welche mehrere Ausführungsformen zulässt, an Hand einer Zeichnung beispielhaft näher erläutert.

Es zeigen:
- Fig. 1: eine elektromagnetische Schalteinrichtung mit einem Line- armotor, gemäß einem ersten Ausführungsbeispiel und
- Fig. 2: eine elektromagnetische Schalteinrichtung mit einem Line- armotor, gemäß einem zweiten Ausführungsbeispiel.

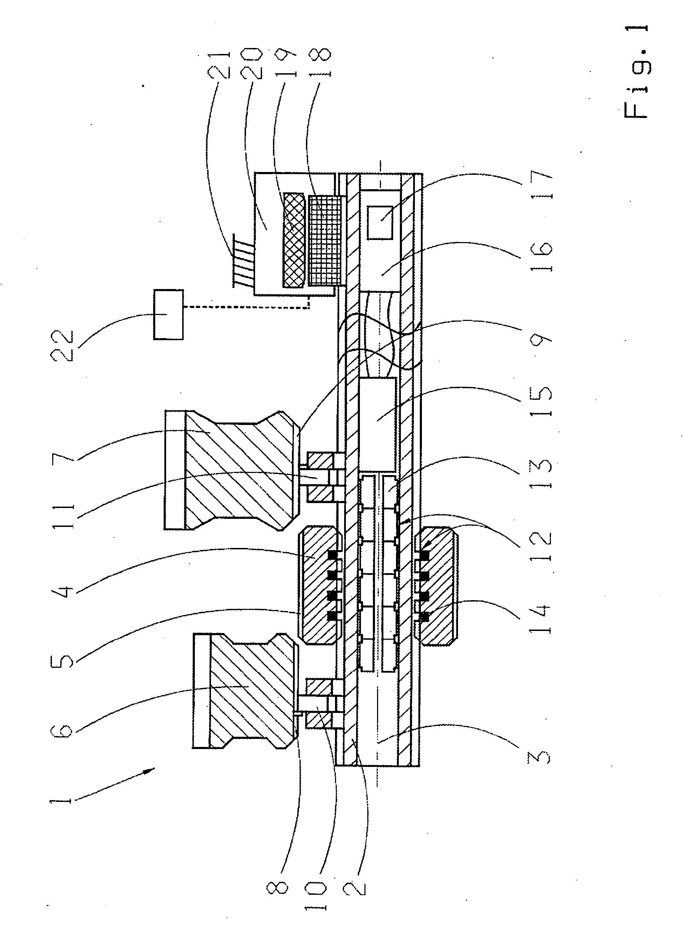

Die Fig. 1 zeigt einen Ausschnitt aus einem Getriebe 1. Ein erstes Zahnrad 6 und ein zweites Zahnrad 7 sind durch Lagerungen 10 und 11 axial fest und drehbar auf einer Getriebewelle 2 gehalten. Die Zahnräder 6 und 7 weisen je eine Innenverzahnung 8 und 9 auf. Eine Schaltklaue 4 ist auf der Getriebewelle 2 drehfest aber axial verschiebbar angeordnet entlang einer Achse 3 der Getriebewelle 2. Ein Primärteil 14 eines Linearmotors 12 ist in der Schaltklaue 4 und ein Sekundärteil 13, des Linearmotors 12 ist in der Getriebewelle 2 angeordnet, welche als Hohlwelle ausgeführt ist. Der Linearmotor 12 weist eine in der Getriebewelle 2 befindliche Steuereinheit 15 auf. Die Steuereinheit 15 kann ebenso außerhalb bzw. auf der Getriebewelle 2 angeordnet sein (hier nicht gezeigt). Am Getriebegehäuse 21 ist eine generatorische Einheit 20 angebracht. Die generatorische Einheit 20 besteht aus einem fest angeordneten Magneten 19 und einer mit der Getriebewelle 2 drehfest verbundener Spule 18. Zur Energieversorgung der Steuereinheit 15 des Linearmotors 12 dient eine in der Getriebewelle 2 angeordnete Energieeinheit 16, welche eine Speichereinheit 17 aufweist. Die Energieeinheit 16 kann auch außerhalb bzw. auf der Getriebetvelle 2 angeordnet sein (hier nicht gezeigt).

Zur drehfesten Verbindung des Zahnrades 6 mit der Getriebewelle 2 und zur damit erzeugten Bildung einer Übersetzungsstufe des Getriebes 1 wird die Schaltklaue 4 axial entlang der Achse 3 in der Zeichnungsebene nach links bewegt. Dies geschieht durch geeignete Ansteuerung des Linearmotors 12. Über eine elektronische Steuereinheit (ECU) 22 erhält die Steuereinheit 15 bestimmte Ansteuersignale, durch welche der Linearmotor 12 ein längs bewegtes Magnetfeld erzeugt, wodurch die Schaltklaue 4 in axialer Richtung auf das Zahnrad 6 bewegt wird. Eine Außenverzahnung 5 der Schaltklaue 4 greift bei synchronen Drehzahlen von Schaltklaue 4 und Zahnrad 6 in die Innenverzahnung 8 des Zahnrades 6 ein. Dadurch wird das Zahnrad 6 drehfest mit der Getriebewelle 2 verbunden. Zur Auflösung der drehfesten Verbindung wird der Linearmotor 12 so angesteuert, dass sich die Schaltklaue 4 in der Zeichnungsebene nach rechts bewegt und sich somit die Verzahnung 5 der Schaltklaue 4 aus der Verzahnung 8 des Zahnrades 6 löst.

Soll sich die Schaltklaue 4 in der Neutralstellung zwischen den beiden Zahnrädern 6 und 7 befinden, kann dies durch eine entsprechende Ansteuerung des Linearmotors 12 geschehen.

Eine Verbindung des Zahnrades 7 mit der Getriebewelle 2 durch Schaltung aus der Neutralposition heraus geschieht in entsprechend umgekehrter Weise. Hierbei wird der Linearmotor 12 so angesteuert, dass ein längs zur Getriebewelle bewegtes Magnetfeld entsteht, welches die Schaltklaue 4 axial in Richtung auf das Zahnrad 7 bewegt.

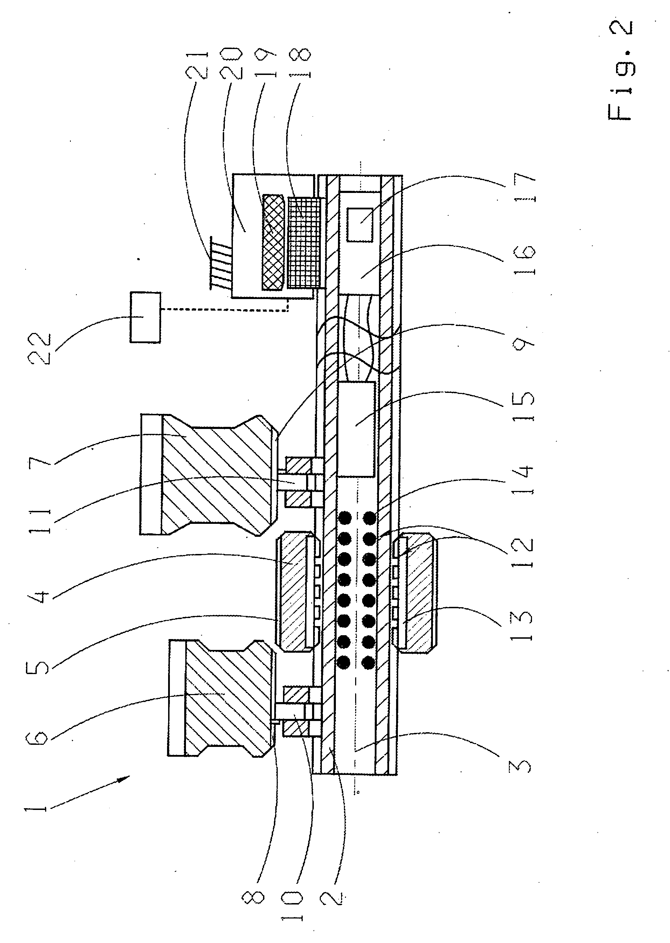

Die Fig. 2 zeigt eine elektromagnetische Schalteinrichtung mit einem Linearmotor 12, gemäß einem zweiten Ausführungsbeispiel. Der Unterschied zwischen dieser Ausführungsform und der Ausführungsform nach Fig. 1 besteht darin, dass sich der Primärteil 14 des Linearmotors 12 in der Getriebewelle 2 befindet und der Sekundärteil 13 des Linearmotors 12 in der Schaltklaue 4 angeordnet ist. Die weitere Figurbeschreibung ist übereinstimmend zur Beschreibung der Fig. 1.

### Bezugszeichen

- 1: Getriebe
- 2: Getriebewelle
- 3: Achse
- 4: Schaltklaue
- 5: Außenverzahnung
- 6: Zahnrad
- 7: Zahnrad
- 8: Innenverzahnung
- 9: Innenverzahnung
- 10: Lagerung
- 11: Lagerung
- 12: Linearmotor
- 13: Sekundärteil
- 14: Primärteil
- 15: Steuereinheit
- 16: Energieeinheit
- 17: Speichereinheit
- 18: Spule
- 19: Magnet
- 20: generatorische Einheit
- 21: Getriebegehäuse
- 22: elektronische Steuereinheit (ECU)

## Patentansprüche

1. Elektromagnetische Schalteinrichtung, für ein Getriebe (1), mit einer elektronischen Steuereinheit (22) und auf einer Getriebewelle (2) um eine Achse (3) drehbar angeordneten Zahnrädern (6, 7), die zur Bildung einer Übersetzungsstufe mit der Getriebewelle (2) drehfest verbindbar sind durch eine axiale Bewegung einer Schaltklaue (4) entlang der Achse (3), wobei die axiale Bewegung der Schaltklaue (4) entlang der Achse (3) durch einen Linearmotor (12) erfolgt, welcher einen Primärteil (14), einen Sekundärteil (13) und eine Steuereinheit (15) aufweist, **dadurch gekennzeichnet, dass** der eine Teil (13, 14) des Linearmotors (12) in der Getriebewelle (2) und der andere Teil (14, 13) des Linearmotors (12) in der Schaltklaue (4) angeordnet ist.

2. Elektromagnetische Schalteinrichtung nach Anspruch 1, **dadurch gekennzeichnet, dass** der Primärteil (14) des Linearmotors (12) in der Schaltklaue (4) und der Sekundärteil (13) des Linearmotors (12) in der Getriebewelle (2) angeordnet ist.

3. Elektromagnetische Schalteinrichtung nach Anspruch 1, **dadurch gekennzeichnet, dass** der Primärteil (14) des Linearmotors (12) in der Getriebewelle (2) und der Sekundärteil (13) des Linearmotors (12) in der Schaltklaue (4) angeordnet ist.

4. Elektromagnetische Schalteinrichtung nach Anspruch 1 bis 3, **dadurch gekennzeichnet, dass** der Linearmotor (12) gleichzeitig als Positionssensor für die Schaltklaue (4) dient.

5. Elektromagnetische Schalteinrichtung nach einem der vorangegangenen Ansprüche, **dadurch gekennzeichnet, dass** eine elektrische Energie für die Steuereinheit (15) des Linearmotors (12) über eine generatorische Einheit (20) erzeugt wird, welche einen Magneten (19) und eine Spule (18) aufweist und die mechanische Energie der Getriebewelle (2) in elektrische Energie umwandelt.

6. Elektromagnetische Schalteinrichtung nach Anspruch 5, **dadurch gekennzeichnet, dass** die elektrische Energie an eine Energieeinheit (16) übertragen wird, welche eine Speichereinheit (17) aufweist.

7. Elektromagnetische Schalteinrichtung nach einem der vorangegangenen Ansprüche, **dadurch gekennzeichnet, dass** die Ansteuersignale für den Linearmotor (12) von der elektronischen Steuereinheit (22) zur Steuereinheit (15) des Linearmotors (12) telemetrisch übertragen werden, beispielsweise induktiv oder kapazitiv.

8. Elektromagnetische Schalteinrichtung nach Anspruch 1 bis 6, **dadurch gekennzeichnet, dass** die Ansteuersignale für den Linearmotor (12) von der elektronischen Steuereinheit (22) zur Steuereinheit (15) des Linearmotors (12) über Schleifkontakte übertragen werden.

9. Elektromagnetische Schalteinrichtung nach einem der vorangegangenen Ansprüche, **dadurch gekennzeichnet, dass** die Steuereinheit (15) und die Energieeinheit (16) innerhalb der Getriebewelle (2) angeordnet sind.

10. Elektromagnetische Schalteinrichtung nach einem der vorangegangenen Ansprüche, **dadurch gekennzeichnet, dass** der Linearmotor (12) als Wärmequelle zur zumindest lokalen Erwärmung der Schalteinrichtung dient.

11. Verfahren zur Ansteuerung einer elektromagnetischen Schalteinrichtung nach einem der Ansprüche 1-10, **dadurch gekennzeichnet, dass** die elektrische Energie für die Steuereinheit (15) des Linearmotors (12) über eine generatorische Einheit (20) erzeugt wird, welche die mechanische Energie der Getriebewelle (2) in elektrische Energie umwandelt.

12. Verfahren nach Anspruch 11, **dadurch gekennzeichnet, dass** die elektrische Energie an eine Energieeinheit (16) übertragen wird, welche eine Speichereinheit (17) aufweist.

13. Verfahren nach Anspruch 11 oder 12, **dadurch gekennzeichnet, dass** die elektrische Energie von der Energieeinheit (16) zur Steuereinheit (15) des Linearmotors (12) telemetrisch übertragen wird.

14. Verfahren nach Anspruch 11 bis 13, **dadurch gekennzeichnet, dass** die Ansteuersignale für den Linearmotor (12) von der elektronischen Steuereinheit (22) zur Steuereinheit (15) des Linearmotors (12) telemetrisch übertragen werden.

## Claims

1. Electromagnetic shifting device for a gearbox (1), having an electronic control unit (22) and gearwheels (6, 7) which are arranged on a transmission shaft (2) so as to be rotatable about an axis (3) and can be connected in a rotationally fixed fashion to the transmission shaft (2) in order to form a transmission stage, by means of an axial movement of a shifting claw (4) along the axis (3), wherein the axial movement of the shifting claw (4) along the axis (3) is carried out by means of a linear motor (12) which has a primary part (14), a secondary part (13) and a control unit (15) **characterized in that** the one part (13, 14) of the linear motor (12) is arranged in the transmission shaft (2), and the other part (14, 13) of the linear motor (12) is arranged in the shifting claw (4).

2. Electromagnetic shifting device according to Claim 1, **characterized in that** the primary part (14) of the linear motor (12) is arranged in the shifting claw (4), and the secondary part (13) of the linear motor (12) is arranged in the transmission shaft (2).

3. Electromagnetic shifting device according to Claim 1, **characterized in that** the primary part (14) of the linear motor (12) is arranged in the transmission shaft (2), and the secondary part (13) of the linear motor (12) is arranged in the shifting claw (4).

4. Electromagnetic shifting device according to Claims 1 to 3, **characterized in that** the linear motor (12) serves simultaneously as a position sensor for the shifting claw (4).

5. Electromagnetic shifting device according to one of the preceding claims, **characterized in that** electrical energy for the control unit (15) of the linear motor (12) is generated by means of a generator unit (20) which has a magnet (19) and a coil (18) and which converts the mechanical energy of the transmission shaft (2) into electrical energy.

6. Electromagnetic shifting device according to Claim 5, **characterized in that** the electrical energy is transmitted to an energy unit (16) which has a storage unit (17).

7. Electromagnetic shifting device according to one of the preceding claims, **characterized in that** the actuating signals for the linear motor (12) are transmitted telemetrically, for example inductively or capacitively, from the electronic control unit (22) to the control unit (15) of the linear motor (12).

8. Electromagnetic shifting device according to Claims 1 to 6, **characterized in that** the actuating signals for the linear motor (12) are transmitted from the electronic control unit (22) to the control unit (15) of the linear motor (12) via sliding contacts.

9. Electromagnetic shifting device according to one of the preceding claims, **characterized in that** the control unit (15) and the energy unit (16) are arranged within the transmission shaft (2).

10. Electromagnetic shifting device according to one of the preceding claims, **characterized in that** the linear motor (12) serves as a heat source for at least local heating of the shifting device.

11. Method for actuating an electromagnetic shifting device according to one of Claims 1-10, **characterized in that** the electrical energy for the control unit (15) of the linear motor (12) is generated by means of a generator unit (20) which converts the mechanical energy of the transmission shaft (2) into electrical energy.

12. Method according to Claim 11, **characterized in that** the electrical energy is transmitted to an energy unit (16) which has a storage unit (17).

13. Method according to Claim 11 or 12, **characterized in that** the electrical energy is transmitted telemetrically from the energy unit (16) to the control unit (15) of the linear motor (12).

14. Method according to Claims 11 to 13, **characterized in that** the actuating signals for the linear motor (12) are transmitted telemetrically from the electronic control unit (22) to the control unit (15) of the linear motor (12).

## Revendications

1. Dispositif de commutation électromagnétique pour une transmission (1), comprenant une unité de commande électronique (22) et des roues dentées (6, 7) disposées de manière rotative autour d'un axe (3) sur un arbre de transmission (2), qui peuvent être connectées de manière solidaire en rotation pour former un rapport de multiplication avec l'arbre de transmission (2), par un déplacement axial d'une griffe de commutation (4) le long de l'axe (3), le déplacement axial de la griffe de commutation (4) le long de l'axe (3) s'effectuant par un moteur linéaire (12) qui présente une partie primaire (14), une partie secondaire (13) et une unité de commande (15), **caractérisé en ce que** l'une des parties (13, 14) du moteur linéaire (12) est disposée dans l'arbre de transmission (2) et l'autre partie (14, 13) du moteur linéaire (12) est disposée dans la griffe de commutation (4).

2. Dispositif de commutation électromagnétique selon la revendication 1, **caractérisé en ce que** la partie primaire (14) du moteur linéaire (12) est disposée dans la griffe de commutation (4) et la partie secondaire (13) du moteur linéaire (12) est disposée dans l'arbre de transmission (2).

3. Dispositif de commutation électromagnétique selon la revendication 1, **caractérisé en ce que** la partie primaire (14) du moteur linéaire (12) est disposée dans l'arbre de transmission (2) et la partie secondaire (13) du moteur linéaire (12) est disposée dans la griffe de commutation (4).

4. Dispositif de commutation électromagnétique selon les revendications 1 à 3, **caractérisé en ce que** le moteur linéaire (12) sert en même temps de capteur de position pour la griffe de commutation (4).

5. Dispositif de commutation électromagnétique selon l'une quelconque des revendications précédentes, **caractérisé en ce qu'**une énergie électrique pour l'unité de commande (15) du moteur linéaire (12) est produite par le biais d'une unité de générateur (20), qui présente un aimant (19) et une bobine (18) et qui convertit l'énergie mécanique de l'arbre de transmission (2) en énergie électrique.

6. Dispositif de commutation électromagnétique selon la revendication 5, **caractérisé en ce que** l'énergie électrique est transmise à une unité de puissance (16) qui présente une unité d'accumulation (17).

7. Dispositif de commutation électromagnétique selon l'une quelconque des revendications précédentes, **caractérisé en ce que** les signaux de commande pour le moteur linéaire (12) sont transmis de l'unité de commande électronique (22) à l'unité de commande (15) du moteur linéaire (12) par télémétrie, par exemple de manière inductive ou capacitive.

8. Dispositif de commutation électromagnétique selon les revendications 1 à 6, **caractérisé en ce que** les signaux de commande pour le moteur linéaire (12) sont transmis de l'unité de commande électronique (22) à l'unité de commande (15) du moteur linéaire (12) par le biais de contacts frottants.

9. Dispositif de commutation électromagnétique selon l'une quelconque des revendications précédentes, **caractérisé en ce que** l'unité de commande (15) et l'unité de puissance (16) sont disposées à l'intérieur de l'arbre de transmission (2).

10. Dispositif de commutation électromagnétique selon l'une quelconque des revendications précédentes, **caractérisé en ce que** le moteur linéaire (12) sert de source de chaleur pour chauffer au moins localement le dispositif de commutation.

11. Procédé pour commander un dispositif de commutation électromagnétique selon l'une quelconque des revendications 1 à 10, **caractérisé en ce que** l'énergie électrique pour l'unité de commande (15) du moteur linéaire (12) est produite par le biais d'une unité de générateur (20), qui convertit l'énergie mécanique de l'arbre de transmission (2) en énergie électrique.

12. Procédé selon la revendication 11, **caractérisé en ce que** l'énergie électrique est transmise à une unité de puissance (16) qui présente une unité d'accumulation (17).

13. Procédé selon la revendication 11 ou 12, **caractérisé en ce que** l'énergie électrique est transmise de l'unité de puissance (16) à l'unité de commande (15) du moteur linéaire (12) par télémétrie.

14. Procédé selon les revendications 11 à 13, **caractérisé en ce que** les signaux de commande pour le moteur linéaire (12) sont transmis de l'unité de commande électronique (22) à l'unité de commande (15) du moteur linéaire (12) par télémétrie.
